(19) Europäisches Patentamt
European Patent Office
Office européen des brevets

(11) **EP 0 551 026 B1**

(12) **EUROPEAN PATENT SPECIFICATION**

(45) Date of publication and mention
of the grant of the patent:
**04.06.1997 Bulletin 1997/23**

(51) Int Cl.⁶: **H01J 29/66**, H04N 3/26

(21) Application number: **92400068.0**

(22) Date of filing: **10.01.1992**

(54) **Focusing device with two dynamic windings for energy recovery**

Fokussiereinrichtung mit zwei dynamischen Erregerspulen zur Energierückgewinnung

Dispositif de focalisation avec deux bobines dynamiques à récupération d'énergie

(84) Designated Contracting States:
FR

(43) Date of publication of application:
**14.07.1993 Bulletin 1993/28**

(73) Proprietor: THOMSON TUBES & DISPLAYS S.A.
92050 Paris La Défense (FR)

(72) Inventor: Perreaut, Jean Marc
F-21000 Dijon (FR)

(74) Representative: Einsel, Robert, Dipl.-Ing.
Deutsche Thomson-Brandt GmbH
Patent- und Lizenzabteilung
Göttinger Chaussee 76
30453 Hannover (DE)

(56) References cited:
EP-A- 0 250 027    FR-A- 1 329 334

- SOVIET INVENTIONS ILLUSTRATED, Section EI, Week 8219, 23 June 1982, Derwent Publications Ltd., London, GB; Class W, AN 82-F6263E/19 & SU-A-849 541
- SOVIET INVENTIONS ILLUSTRATED, Section EI, Week 8720, 27 May 1987, Derwent Publications Ltd., London, GB; Class W, AN 87-141775/20 & SU-A-1 259 519
- PATENT ABSTRACTS OF JAPAN, vol. 9, no. 284 (E-357)(2007) 12 November 1985 & JP-A-60 127 643

## Description

The invention relates to focusing devices applying a magnetic field to the electron beam of a scanning beam apparatus such as a cathode ray tube, for focusing the beam at a point on a screen or other surface oriented normal to the beam. In particular a focusing device is provided with two coupled windings in the dynamic focusing portion of the focusing device, rather than a single winding. one of the windings of the dynamic circuit is an active deflection winding and produces the magnetic deflection field which converges the electrons in the beam during the trace interval of scanning. Another winding of the dynamic circuit is coupled to the active deflection winding for returning a portion of the energy developed in the dynamic focusing circuit to the power supply. Whereas energy that would otherwise be dissipated is returned to the power supply, the invention produces the required focusing deflection with substantially decreased power supply loading.

Electrons emitted from the cathode of a CRT are accelerated toward the screen, but tend to diverge as they travel due to electrostatic repulsion between the electrons. The electrons can be forced into a tight beam using magnetic fields. Typically, means producing a steady state or static magnetic field and means producing a varying or dynamic magnetic field are superimposed for focusing. The dynamic portion of the field varies as a function of the scanning position of the beam on the screen or other surface on which the beam is incident.

The focusing coils of a scanning electron beam apparatus form a magnetic lens having a focal length. However, the screen or other display device is substantially planar rather than spherical, and as a result the distance between the focusing device and the point at which the beam is incident on the planar display device varies as a function of vertical and horizontal position of the scanning beam. The distance is greater at the edges of the screen and less in the center. In order to accommodate the difference in beam path length (i.e., to converge the beam at a point as the beam scans through areas of varying path length), the dynamic focusing coils are driven with a current signal which is shaped as a parabola at the scanning rate of the main deflection circuits.

The dynamic focusing current signal adds to or subtracts from the magnetic field applied by the static field generator, which may comprise permanent magnets or a coil carrying a steady state direct current. In a device wherein the static and dynamic signals are applied to the same coil, the steady state and time varying currents can be summed.

The dynamic portion of the focusing deflection is such that the level of the focusing deflection field due to the sum of the static (e.g., permanent magnet) field and the dynamic parabola is at a maximum when the beam is directed at the center of the screen (corresponding to a shorter focal length) and at a minimum when the beam is directed at the edges of the screen (corresponding to a longer focal length). The beam converges at a point on the screen or other display apparatus regardless of the X-Y position at which the beam is incident while scanning.

The dynamic part of the focusing device is generally controlled by a current-controlled amplifier, i.e., an amplifier which produces a parabolic current through a focusing coil coupled to the output of the amplifier in response to an input at the scanning frequency. The input is typically coupled to a parabola voltage generated synchronously with the flyback pulse which resets the main deflection circuits after a horizontal scan. Current-controlled amplifiers, however, dissipate a great deal of power.

A focussing device for a scanning electron beam according to the preamble of claim 1 is disclosed in SU-A-849 541.

The invention is as set out in claim 1. The dependent claims relate to preferred embodiments.

It is an aspect of the invention to reduce the power dissipation of a focusing deflection device by using a resonant circuit to store a portion of the energy developed by a focusing deflection circuit and to return the stored energy to the power supply.

It is another aspect of the invention to provide two coils in a focusing device rather than one, the two coils being coupled such that one of the coils (the focusing coil) produces a field for converging the electron beam during the trace interval of the beam, and the other of the coils couples stored energy to the focusing coil during the retrace interval, such that current is returned to the power supply.

It is a further aspect of the invention to superimpose two coils in a focusing circuit such that the coils are optimally coupled for providing the necessary focusing deflection field and returning a substantial portion of the energy developed by the focusing circuit to the power supply driving the deflection circuit.

These and other aspects of the invention are found in an electron beam focusing device for apparatus such as cathode ray tubes wherein an electron beam is scanned on a flat surface normal to the beam and converged at a point on the flat surface using magnetic fields. The focusing device includes a static field generator for converging the beam, and a dynamic focus device. The dynamic focus device has a first winding coupled to a current supply for providing a magnetic field substantially defining a parabola during a trace interval of the beam to account for the variation in beam path length which occurs with scanning, and a second winding magnetically coupled to the first winding. A resonant circuit coupled to the first winding and to the second winding stores energy during the trace interval and releases energy during the retrace interval such that the second winding induces a reverse current in the first winding, thereby returning current to the power supply during retrace. The static field generator and the first and second windings are mounted axially adjacent or overlapped along the beam axis. The static field generator can be a permanent magnet and the first and second windings can be superimposed at the axial center of the static field of the magnet. Alternatively, the static field generator can have a winding in a magnetically permeable shield structure with a gap for concentrating the static field at an axial end of the focusing device, the first and second windings being superimposed on one another adjacent the gap and outside the shield.

FIGURE 1 is a schematic diagram illustrating a focusing device according to the invention;

FIGURE 2 is a partial cross section through a focusing coil device including coils L1 and L2 in FIGURE 1, and showing a cross section of the focusing coil on one side of the axis of the electron beam;

FIGURE 3 is a partial cross section corresponding to FIGURE 2, showing an alternative embodiment of the invention;

FIGURE 4 is a partial cross section corresponding to FIGURE 2, showing a further alternative embodiment; and,

FIGURE 5 is a schematic diagram illustrating a preferred embodiment of the invention wherein a static magnetic field generator and dynamic vertical and horizontal field generators are combined.

The invention is useful with any type of focusing device, whether or not the device includes permanent magnets. For the dynamic part of the focusing deflection, two windings are coupled such that the one winding accomplishes focusing deflection and the other winding is provided as a part of a resonant circuit which stores energy during the deflection part of a scanning cycle and couples the stored energy to the focusing deflection winding during retrace for returning energy to the power supply. The circuit thus requires a special winding arrangement.

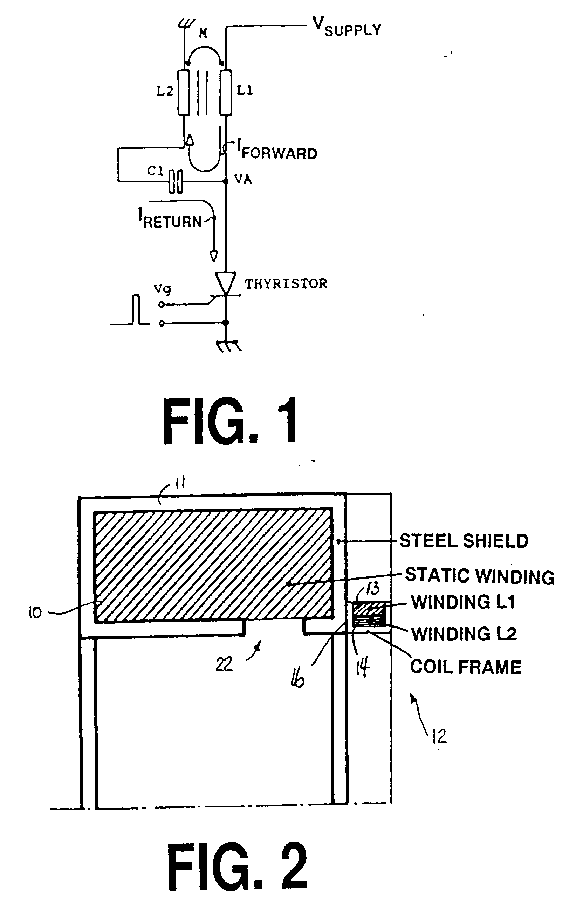

The focusing circuit of the invention includes two windings which are arranged such that they are magnetically coupled. The two coupled windings (L1 and L2 in FIGURE 1) permit recovery of the energy stored in a capacitor C1 during the forward or trace portion of a scanning cycle. The ratio of the inductances of the two coupled coils is according to the following relationship, where the times Ta and $\tau$ represent the trace and retrace times, respectively:

$$(L_1/L_2) = ((Ta/\tau) - 1)^2$$

Using a circuit according to this relationship the power dissipated in the focusing device can be reduced relative to the power dissipated by a current amplifier circuit by a factor of ten.

According to a first embodiment of the invention as shown in FIGURE 2, the invention ion can be applied to a classic focusing device comprising a static winding 10 mounted in a shield 11 of extra soft (high permeability) iron. The shield encloses the static winding but for a gap 22 which is disposed near one axial side of the focusing device. The shield 11 concentrates the magnetic flux lines of the static field to an axially short length relative to the beam path because the high permeability of the shield confines the flux lines to the shield material except at the gap 22. The static coil and shield structure thus constitute a magnetic focusing lens which is thin in the axial direction along the beam path.

The dynamic focusing device 12 is placed on the exterior of the shield 11 so as to avoid coupling between the static and the dynamic fields. The dynamic focusing device 12 includes the two coupled coil windings 13, 14 (L1 and L2) discussed above, one being wound over the other and the two being housed in a coil frame 16. The dynamic focusing device 12 is disposed on the same axial side of the shield and static winding as the gap, thereby placing the center or maximum point of the dynamic focusing device close to the center of the static focusing device.

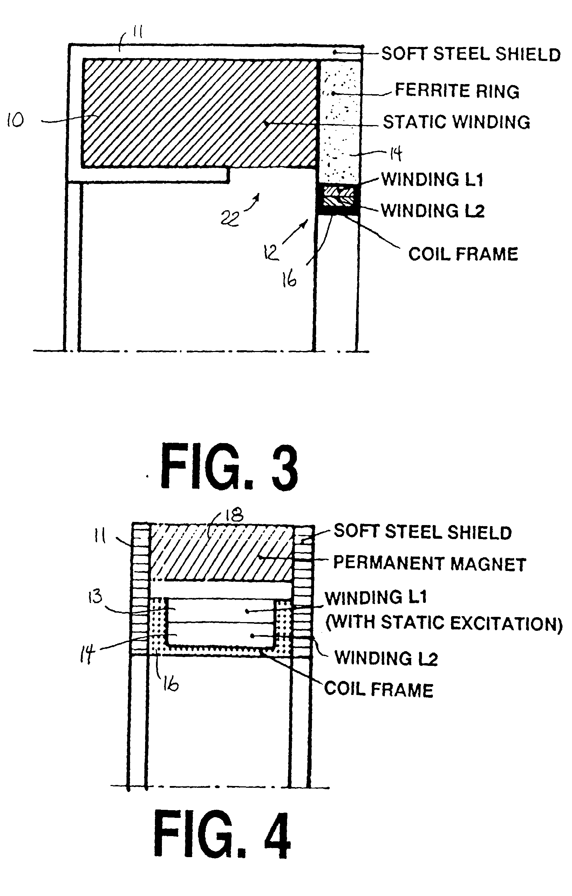

FIGURES 3 and 4 illustrate alternative preferred structures for the focusing device, in each case including means for generating a static magnetic field and the two coupled coils of the dynamic focus coil that provide the adjustment of the focusing field as a whole for accommodating the difference in focal length as a function of scanning displacement of the beam, and also store and return to the power supply a portion of the energy used in generating the focusing field. Corresponding reference numerals are used in the respective figures to identify corresponding elements.

In the alternative embodiment of FIGURE 3, the static coil winding 10 is also enclosed in a shield 11 of high permeability material and the structure defines a gap 22 at which the static field is centered due to radiation of the magnetic flux lines from the magnetically permeable material adjacent the gap. In this embodiment the shield 11 does not fully enclose the winding except for the gap. A ferrite ring 14 is provided on the same axial side of the static winding 11 as the gap, relative to the beam path. The focusing and coupled energy return coils L1, L2 are disposed under the ferrite ring, and enclosed in a casing 16. This arrangement places the centers of the static and dynamic field generating means axially very close to one another with respect to the beam path.

According to the embodiment of FIGURE 4, the means generating the static field and the two coupled coils of the dynamic focusing device are axially overlapped relative to the beam path such that their maximum points along the axis of the electron beam coincide. Although it would be possible to generate the static field with a winding carrying a direct current, it is preferred that the static field according to this embodiment be generated by permanent magnet material 18, thereby precluding any problems associated with coupling between the static and dynamic field generation means.

By superimposing the permanent magnet static field and the two coils of the dynamic focusing device, maximum efficiency is obtained in the dynamic circuits. Furthermore, this arrangement permits the dynamic focusing device to be further excited with a static focusing current for adjusting the level of the static field, using the same winding which produces the dynamic focusing field.

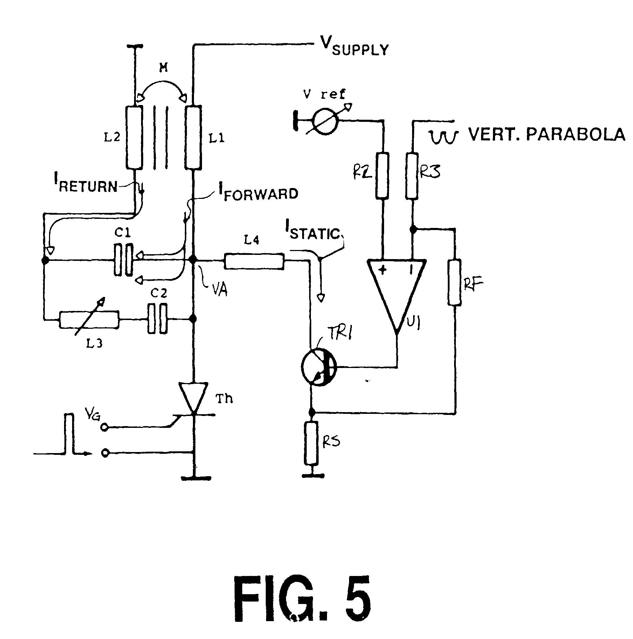

A circuit operable for superimposing a static current for adjusting the focus field is shown in FIGURE 5. According to this embodiment the current amplifier which produces the adjustment current can also be arranged to provide a focus correction parabola operating at the vertical rate of the raster.

The circuits of FIGURES 1 and 5 are in each case tuned to the line scan half-frequency, with recovery of energy during the horizontal retrace interval. This is accomplished by use of at least two coupled induction coils L1 and L2. Induction coil L1 is in fact the dynamic focusing winding in which a parabolic current must flow during the trace interval of the scan, for adjusting the focal length of the magnetic lens provided by the focusing device as a function of scanning position of the beam.

The supply voltage $V_{SUPPLY}$ is constant, for example 15 VDC and at a typical current drain of about 230 mA, or about 3.5W power dissipation. Coil L1 is coupled between the supply voltage and the anode of a thyristor Th, whose cathode is coupled to ground. The gate input of the thyristor Th is coupled to the flyback pulse $V_G$, for initiating conduction of thyristor Th upon entry into the retrace interval. Referring to FIGURE 1, the thyristor coupled between coil L1 and ground does not conduct during the trace interval. During the trace interval, current $I_{FORWARD}$ from the power supply is coupled to ground through inductor L1, capacitor C1 and inductor L2. A sinusoidal current is provided in inductor L1, and capacitor C1 becomes charged (more positive on its terminal coupled to point VA). The circuit is tuned such that the current in inductor L1 reaches a minimum at the end of the scan interval. The flyback pulse from the horizontal deflection circuits initiates conduction of thyristor Th at gate input $V_G$ at the beginning of retrace. The thyristor essentially grounds point VA, and begins to conduct current $I_{RETURN}$, from the capacitor C1 and inductor L2.

The energy stored in capacitor C1 during the trace interval drives a reverse current during retrace. Whereas induction coils L1 and L2 are coupled, and the current produced during retrace in coil L2 is in the direction of $I_{RETURN}$, stored energy is transferred to coil L1. Coil L1 now conducts in the opposite direction, i.e., returning to the power supply the stored energy accumulated in the resonant circuit during the trace interval.

Thyristor Th continues to conduct after triggering so long as charge remains to be drained, i.e., until current flow ceases. When current through thyristor Th ceases, also tuned to occur at the end of the retrace interval, all the available stored energy has been extracted. Thyristor Th then becomes reverse biased because capacitor C1 has been charged in the opposite direction by current $I_{RETURN}$. With cutoff of thyristor Th the voltage at point VA drops to a negative peak. The cycle begins again with current in coil L1 varying sinusoidally over the trace interval. The current in the thyristor is related to the number of turns of the respective coils, according to the relationship:

$$I_{Th} = I_{L1}{}^x (n1/n2)$$

where n1 is the number of turns of L1 and n2 is the number of turns of L2.

The ratio of the values for the two windings L1 and L2 is a function of the scan characteristics. Furthermore, the values for the sum of inductances of coils L1 and L2 and the capacitance of capacitor C1 are defined with reference to the forward scan time and the values for coil L2 and C1 are determined by the retrace time of the scanning system.

During trace, coils L1 and L2 are effectively in series. Assuming that the coupling between coils L1 and L2 is perfect, the inductance can be calculated from the required timing relationship.

$$L = L_1 + L_2 + 2\sqrt{L_1 L_2}$$

$$Ta = \pi\sqrt{LC_1} = \pi\sqrt{(L_1 + L_2 + 2\sqrt{L_1 L_2})C_1}$$

$$Ta = \pi\sqrt{(L_1 + L_2)^2 C_1} \text{ or } Ta/(\pi\sqrt{C_1}) = \sqrt{L_1} + \sqrt{L_2}$$

During retrace, coil L2 and capacitor C1 form the timing circuit. Therefore the following relationships apply for correlating the retrace time $\tau$ with the respective values of inductance and capacitance:

$$\tau = \pi\sqrt{L_2 C_1} \text{ or } \tau/(\pi\sqrt{C_1}) = \sqrt{L_2}$$

Hence, we obtain:

$$(L_1/L_2) = ((Ta/\tau) - 1)^2$$

Any system using the arrangement described hereinabove will necessarily be governed by this formula.

Adjustment of the amplitude of the dynamic current is done by varying the level of the supply voltage, which must be kept stable in order to avoid focus drift. Thermal drift due to variation in the resistance of the windings is negligible.

In FIGURE 5, a further tuned circuit comprising capacitor C2 and adjustable inductor L3 are arranged in parallel with capacitor C1. This circuit adjusts the sinusoidal shape of the current in the focusing inductor L1 to more nearly approximate a parabola. The maximum current of the parabola applied to the dynamic focus coil occurs at the center of the screen, which is considered the origin (the current therefore being a cosine function). For applications which require higher precision, the cosine provided by the tuned circuit of L1, C1 and L2 can be modified by summing a second cosine function according to the relationship:

$$k\Theta^2 = \cos\Theta - ((3/2) - \sqrt{2})\cos(2\Theta)$$

The resonant circuit formed by capacitor C2 and coil L3. This circuit operates at twice the frequency of the circuit defined by coils L1, L2 and capacitor C1. The current flowing in this additional parallel circuit is added to the main current through capacitor C1, for shaping the resulting parabola current in coil L1. Coil L3 permits a precise manual adjustment of the circuit. The voltage across the terminals of inductor L1 then becomes linear, i.e., the differential of the current.

According to FIGURE 5, the current in coil L1 is modified further by an additional signal, at a much lower frequency. The current amplifier shown in FIGURE 5 sums the additional current $I_{STATIC}$ with the cosine current at capacitor C1 and the cosine current at series connected capacitor C1 and inductor L3. The operational amplifier in the current control amplifier section produces an output current via transistor 20 that is proportional to the voltage signals at its input. The voltage across sensing resistor RS indicates the current level in transistor 20 and is fed back to an input of the amplifier U1 through a feedback path including resistor R2. The respective inputs of amplifier U1 are also coupled via series resistors R3 and R4 to a voltage reference $V_{REF}$, and to a vertical rate parabola signal $P_{VERT}$.

The current control amplifier injects a current parabola at the frame frequency for vertical focus correction and a static current (adjustable by voltage reference $V_{REF}$) which corrects the level of the field produced by the permanent magnets. The inputs of operational amplifier U1 of the amplifier configuration are coupled to a preferably adjustable voltage reference $V_{REF}$ and the vertical voltage parabola signal via series resistors R2, R3. Transistor TR1 couples the output of amplifier U1 to coil L4 and thus to the summing junction VA. Feedback of the current signal sensed by current sense resistor RS is fed back to the input through feedback resistor RF.

The circuit benefits from current control provided by the feedback configuration of the current amplifier while also achieving substantial reduction of power dissipation in the portion of the focusing circuit operating at the line scanning frequency.

## Claims

1. A focusing device for a scanning electron beam, having means (10, 18) for producing a static focusing field for converging said beam and means (L1) for producing a dynamic focusing field for said beam, characterized in that:

said dynamic focus means has first (L1) and second (L2) magnetically coupled windings, said first winding is a dynamic focus winding having a first terminal coupled to a first side of a current supply ($V_{SUPPLY}$) and a second terminal (VA) coupled to a second side (ground) of said current supply through a switch (Th) which is conductive during a retrace interval, and nonconductive during a trace interval, said second winding having a first terminal coupled to said second side (ground) of said current supply; and a capacitance (C1) having a first terminal coupled to a second terminal of said second winding (L2) and a second terminal coupled to said second terminal (VA) of said first winding, said capacitance providing a current path for current to flow from said first and second windings back to the current supply when said switch is nonconductive, the inductance values of said first and second windings having the approximate relationship

$$\frac{L_1}{L_2} = \left(\frac{Ta}{\tau} - 1\right)^2$$

where:

L1 and L2 are the inductance values of said first and second windings, Ta is the length of the trace interval, $\tau$ is the length of the retrace interval, and the value of said capacitance is approximately

$$C1 = \frac{\tau^2}{\pi^2 L_2}.$$

2. The focusing device according to claim 1, wherein said means for producing said static focusing field comprises an annular static field winding and wherein the first and second windings comprise annular windings disposed substantially coaxially with said static winding.

3. The focusing device according to claim 2, wherein said means for producing said static focusing field is substantially enclosed in a magnetically permeable shield, said shield having a gap opening toward said beam.

4. The focusing device according to claim 3, wherein said first and second windings are mounted adjacent said gap and interiorly of said shield.

5. The focusing device according to claim 1, wherein said means for producing said static focusing field comprises:

> a magnetic casing partly surrounding a static field winding; first and second dynamic windings are mounted in a ferrite ring disposed adjacent said static field winding such that said casing and said ferrite ring define a gap; and, a dynamic field produced by said first winding is concentrated adjacent said gap along a path of said beam.

6. The focusing device according to claim 1, wherein said means for producing said static field comprises a permanent magnet.

7. The focusing device according to claim 6, wherein said first and second windings are superimposed radially on one another and are centered at a point of maximum static field produced by said permanent magnet.

8. The focusing device according claim 1, comprising a current supply having a resonant circuit coupled to said first coil for generating a cosine current in said focus coil approximating a parabola current, said resonant circuit being operable to store a portion of energy developed during said trace intervals of said beam and to return said portion of energy to said current supply during said retrace intervals of said beam.

9. The focusing device of claim 8, wherein said resonant circuit comprises a capacitor coupled to said second coil, said capacitor being charged during said trace intervals and discharged during said retrace intervals.

10. The focusing device of claim 9, wherein said first coil is coupled to a current sink for grounding a terminal of said first coil during said retrace intervals, whereby energy induced in said first coil by said second coil is referenced to ground during said retrace intervals for supplying a reverse current to said current generator.

11. The focusing device of claim 8, wherein said resonant circuit comprises a capacitor coupled in series with said second coil, said series coupled capacitor and second coil being coupled in parallel with said first coil.

12. The focusing device of claim 8, further comprising an adjustment circuit coupled in parallel with at least one of said first coil and said resonant circuit for modifying said cosine current.

**Patentansprüche**

1. Fokussiereinrichtung für einen Rasterelektronenstrahl, mit Mitteln (10, 18) zum Erzeugen eines statischen Fokussierfeldes zum Konvergieren des Strahls und einem Mittel (L1) zum Erzeugen eines dynamischen Fokussierfeldes für den Strahl, dadurch gekennzeichnet, daß

> das dynamische Fokussiermittel eine erste (L1) und zweite (L2) magnetisch gekoppelte Wicklung aufweist, wobei die erste Wicklung eine dynamische Fokussierwicklung ist, bei der ein erster Anschluß an eine erste Seite einer Stromversorgung ($V_{VERSORGUNG}$) angekoppelt ist und ein zweiter Anschluß (VA) über einen Schalter (Th), der während einer Rücklaufperiode leitend ist und während einer Zeilenabtastperiode nicht leitend ist, an eine zweite Seite (Masse) der Stromversorgung angekoppelt ist, wobei die zweite Wicklung mit einem ersten Anschluß an die zweite Seite (Masse) der Stromversorgung angekoppelt ist; und einer Kapazität (C1) mit einem ersten, an einen zweiten Anschluß der zweiten Wicklung (L2) angekoppelten Anschluß und einem zweiten, an den zweiten Anschluß (VA) der ersten Wicklung angekoppelten Anschluß, wobei die Kapazität einen Stromweg bereitstellt, so daß Strom von der ersten und zweiten Wicklung zurück zur Stromversorgung fließen kann, wenn der Schalter nicht leitend ist, wobei die Induktanzwerte der ersten und zweiten Wicklung die ungefähre Beziehung

$$\frac{L1}{L2} = \left(\frac{Ta}{\tau}-1\right)^2$$

aufweist, wobei

> L1 und L2 die Induktanzwerte der ersten und zweiten Wicklung sind,
> Ta die Länge der Zeilenabtastperiode,
> $\tau$ die Länge der Rücklaufperiode ist und der Wert der Kapazität ungefähr

$$C1 = \frac{\tau^2}{\pi^2 L2}$$

beträgt.

**2.** Fokussiereinrichtung nach Anspruch 1, bei der das Mittel zum Erzeugen des statischen Fokussierfelds eine ringförmige Wicklung für das statische Feld umfaßt und wobei die erste und zweite Wicklung ringförmige Wicklungen umfassen, die im wesentlichen koaxial zu der statischen Wicklung angeordnet sind.

**3.** Fokussiereinrichtung nach Anspruch 2, bei der das Mittel zum Erzeugen des statischen Fokussierfelds im wesentlichen in einem magnetisch durchlässigen Schirm eingeschlossen ist, wobei der Schirm einen sich zum Strahl öffnenden Spalt aufweist.

**4.** Fokussiereinrichtung nach Anspruch 3, bei der die erste und zweite Wicklung neben dem Spalt und innerhalb des Schirms befestigt sind.

**5.** Fokussiereinrichtung nach Anspruch 1, bei der das Mittel zum Erzeugen des statischen Fokussierfeldes folgendes umfaßt:

ein magnetisches Gehäuse, das eine Wicklung für ein statisches Feld teilweise umgibt; eine erste und zweite dynamische Wicklung sind in einem Ferritring befestigt, der derart neben der Wicklung für das statische Feld angeordnet ist, daß das Gehäuse und der Ferritring einen Spalt festlegen; und
ein von der ersten Wicklung erzeugtes dynamisches Feld wird neben dem Spalt entlang eines Wegs des Strahls konzentriert.

**6.** Fokussiereinrichtung nach Anspruch 1, bei der das Mittel zum Erzeugen des statischen Feldes einen Permanentmagnet umfaßt.

**7.** Fokussiereinrichtung nach Anspruch 6, bei der die erste und zweite Wicklung einander radial überlagert sind und ihre Mitte in einem Punkt haben, wo das von dem Permanentmagnet erzeugte statische Feld ein Maximum aufweist.

**8.** Fokussiereinrichtung nach Anspruch 1, die eine Stromversorgung und einen Schwingkreis umfaßt, der an die erste Spule angekoppelt ist, um in der Fokussierspule einen kosinusförmigen Strom zu erzeugen, der sich einem parabelförmigen Strom annähert, wobei der Schwingkreis einen Teil der Energie, die während der Zeitabtastperioden des Strahls entwickelt wurde, speichert und diesen Teil der Energie während der Rücklaufperioden des Strahls zur Stromversorgung zurückführt.

**9.** Fokussiereinrichtung nach Anspruch 8, bei der der Schwingkreis einen Kondensator umfaßt, der an die zweite Spule angekoppelt ist, wobei der Kondensator während der Zeilenabtastperioden geladen und während der Rücklaufperioden entladen wird.

**10.** Fokussiereinrichtung nach Anspruch 9, bei der die erste Spule zur Erdung eines Anschlusses der ersten Spule während der Rücklaufperioden an eine Stromsenke angekoppelt ist, wobei die durch die zweite Spule in der ersten Spule induzierte Energie während der Rücklaufperioden auf Masse bezogen wird, um dem Stromgenerator einen Rückstrom zuzuführen.

**11.** Fokussiereinrichtung nach Anspruch 8, bei der der Schwingkreis einen Kondensator umfaßt, der mit der zweiten Spule in Reihe gekoppelt ist, wobei die Reihenschaltung aus Kondensator und zweiter Spule zur ersten Spule parallel gekoppelt ist.

**12.** Fokussiereinrichtung nach Anspruch 8, die weiterhin eine Justierschaltung umfaßt, die zum Modifizieren des kosinusförmigen Stroms parallel zu der ersten Spule und/oder zu dem Schwingkreis gekoppelt ist.

**Revendications**

**1.** Dispositif de focalisation pour un faisceau d'électrons de balayage, comportant des moyens (10, 18) pour produire un champ de focalisation statique pour faire converger ledit faisceau et des moyens (L1) pour produire un champ de focalisation dynamique pour ledit faisceau, caractérisé en ce que :

lesdits moyens de focalisation dynamique ont un premier (L1) et un deuxième (L2) enroulements couplés magnétiquement, ledit premier enroulement est un enroulement de focalisation dynamique ayant une première borne couplée à un premier côté d'une source de courant ($V_{ALIM}$) et une deuxième borne (VA) couplée à un deuxième côté (terre) de ladite source de courant via un commutateur (Th) qui est conducteur au cours d'un intervalle de retour du spot, et non conducteur au cours d'un intervalle d'aller du spot, ledit deuxième enroulement ayant une première borne couplée audit deuxième côté (terre) de ladite source de courant, et
une capacité (C1) ayant une première borne couplée à une deuxième borne dudit deuxième enroulement (L2) et une deuxième borne couplée à ladite deuxième borne (VA) dudit premier enroulement, ladite capacité offrant un trajet de courant pour renvoyer le courant desdits premier et deuxième enroulements vers la source de courant lorsque ledit commutateur est non conducteur,

les valeurs d'inductances desdits premier et deuxième enroulements ayant la relation approximative :

$$\frac{L1}{L2} = \left(\frac{Ta}{\tau}-1\right)^2$$

où :

L1 et L2 sont les valeurs d'inductance desdits premier et deuxième enroulements,
Ta est la longueur de l'intervalle d'aller du spot,
$\tau$ est la longueur de l'intervalle de retour du spot, et
la valeur de ladite capacité est approximativement :

$$C\,1 = \frac{\tau^2}{\pi^2 L\,2}$$

2. Dispositif de focalisation selon la revendication 1, dans lequel lesdit moyens pour produire ledit champ de focalisation statique comprennent un enroulement de champ statique annulaire et dans lequel le premier et le deuxième enroulements comprennent des enroulements annulaires disposés de manière sensiblement coaxiale avec ledit enroulement statique.

3. Dispositif de focalisation selon la revendication 2, dans lequel lesdits moyens pour produire ledit champ de focalisation statique sont sensiblement enserrés dans un blindage perméable magnétiquement, ledit blindage ayant un interstice s'ouvrant vers ledit faisceau.

4. Dispositif de focalisation selon la revendication 3, dans lequel lesdits premier et deuxième enroulements sont montés au voisinage dudit interstice et à l'intérieur dudit blindage.

5. Dispositif de focalisation selon la revendication 1, dans lequel lesdits moyens pour produire ledit champ de focalisation statique comprennent :

un boîtier magnétique entourant partiellement un enroulement de champ statique, un premier et un deuxième enroulements dynamiques sont montés dans un anneau de ferrite disposé à proximité dudit enroulement de champ statique de telle sorte que ledit boîtier et ledit anneau de ferrite définissent un interstice, et
un champ dynamique produit par ledit premier enroulement est concentré au voisinage dudit interstice le long d'une trajectoire dudit faisceau.

6. Dispositif de focalisation selon la revendication 1, dans lequel lesdits moyens pour produire ledit champ statique comprennent un aimant permanent.

7. Dispositif de focalisation selon la revendication 6, dans lequel lesdits premier et deuxième enroulements sont superposés radialement l'un à l'autre et sont centrés en un point de champ statique maximum produit par ledit aimant permanent.

8. Dispositif de focalisation selon la revendication 1, comprenant une source de courant ayant un circuit résonant couplé à ladite première bobine et pour générer un courant cosinusoïdal dans ladite bobine de focalisation se rapprochant approximativement d'un courant parabolique, ledit circuit résonant étant à même de stocker une partie de l'énergie développée au cours desdits intervalles d'aller du spot dudit faisceau et de renvoyer ladite partie d'énergie à ladite source de courant au cours desdits intervalles de retour du spot dudit faisceau.

9. Dispositif de focalisation selon la revendication 8, dans lequel ledit circuit résonant comprend un condensateur couplé à ladite deuxième bobine, ledit condensateur étant chargé au cours desdits intervalles d'aller du spot et déchargé au cours desdits intervalles de retour du spot.

10. Dispositif de focalisation selon la revendication 9, dans lequel ladite première bobine est couplée à un récepteur de courant pour mettre à la terre une borne de ladite première bobine au cours desdits intervalles de retour du spot, l'énergie induite dans ladite première bobine par ladite deuxième bobine étant connectée à la terre au cours desdits intervalles de retour du spot pour acheminer un courant inverse audit générateur de courant.

11. Dispositif de focalisation selon la revendication 8, dans lequel ledit circuit résonant comprend un condensateur couplé en série avec ladite deuxième bobine, ledit condensateur et ladite deuxième bobine couplés en série étant couplés en parallèle avec ladite première bobine.

12. Dispositif de focalisation selon la revendication 8, comprenant en outre un circuit d'ajustement couplé en parallèle avec au moins ladite première bobine ou ledit circuit résonant pour modifier ledit courant cosinusoïdal.

# FIG. 1

STEEL SHIELD

STATIC WINDING

WINDING L1

WINDING L2

COIL FRAME

# FIG. 2

**FIG. 3**

SOFT STEEL SHIELD
FERRITE RING
STATIC WINDING
WINDING L1
WINDING L2
COIL FRAME

**FIG. 4**

SOFT STEEL SHIELD
PERMANENT MAGNET
WINDING L1
(WITH STATIC EXCITATION)
WINDING L2
COIL FRAME

FIG. 5